# EUROPEAN PATENT APPLICATION

(11) **EP 0 878 344 A2**
(43) Date of publication of application: **18.11.1998**
(21) Application number: 98303361.4
(22) Date of filing: 29.04.1998
(51) Int. Cl.: B60N 2/12

(54) **Seat sliding apparatus**

(30) Priority: 13.05.1997 JP 122497/97
(71) Applicant: FUJIKIKO KABUSHIKI KAISHA, Tokyo (JP)
(72) Inventor: Kanda, Yoshihiro, Kosai-shi, Shizuoka-ken (JP); Matsuura, Hiroshi, Kosai-shi, Shizuoka-ken (JP)
(74) Representative: Abbie, Andrew Kenneth

(57) **Abstract**

A seat sliding apparatus is constructed by a lower rail to be mounted to a vehicle floor, an upper rail on which the lower rail slides, a memory mechanism section, a lock member locking the upper rail to the lower rail and a walk-in mechanism section for locking and unlocking movement of a seat section in a forward-and-backward direction through the memory mechanism section and the lock member, so that the memory mechanism section is assembled to at least one substrate so as to be united.

## Description

### BACKGROUND OF THE INVENTION

### Field of the Invention

The present invention relates to a seat sliding apparatus for a vehicle seat having a walk-in mechanism.

### Description of the Related Arts

In this kind of a seat sliding apparatus, a seat section having a seat back, which can fold in a forward-and-backward direction, is mounted to an upper rail. The upper rail is fitted into a lower rail fixed to a floor side so as to be able to slide.

When the seat back is folded forward, a lock of a lock member which obstructs the movement of the seat section in the forward-and-backward direction is released by actuation of the walk-in mechanism, namely, the seat section is in the unlocked state, and the seat section is moved forward by an applied force of a spring.

In addition, in order to prevent the lock member from returning to the locked state at the time when the seat section is moved forward, a memory mechanism section having an operation lever and a memory bracket is provided.

The operation lever is mounted with its axis being fixed to the upper rail by an axis fixing pin for operation lever, and a force is applied to the operation lever by a draft spring which is installed across the upper rail and the operation lever so that the operation lever is moved circularly in a direction where wheels rotates when a vehicle backs up.

When the seat back is folded forward, the operation lever is moved circularly by actuation of the walk-in mechanism in the direction opposite to the above circular movement against the spring force of the draft spring so as to press down the lock member. As a result, the locked state of the seat section due to the lock member is released, and the seat section is in an unlocked state in which it can move in the forward-and-backward direction.

In addition, the memory bracket is mounted so that its axis is fixed to the upper rail by an axis fixing pin for memory bracket, a force is applied to the memory bracket by a draft spring which is installed across the upper rail and the memory bracket so that the memory bracket is moved circularly in a direction in which the wheels rotates when the vehicle advances.

While the seat section is moved from the forward moved position to a prescribed backed position by a memory holding pin, which is pushed through a slanted slide hole provided to the memory bracket and a horizontal slide hole provided to the upper rail and by cooperation of the operation lever and memory bracket, the lock member can be in the lock-released state, namely, the seat section can be maintained in the unlocked state.

The above-mentioned seat sliding apparatus is arranged so that the axis fixing pins which are mounted respectively to the operation lever and memory bracket are caulked and fixed to the upper rail, and dismounting of parts occasionally occurs at the time of the caulking step, so this apparatus has a problem of dissatisfactory assembly.

### SUMMARY OF THE INVENTION

The present invention has been achieved with such points in mind.

It therefore is an object of the present invention to provide a seat sliding apparatus whose assembling is improved.

To achieve the object, according to a first aspect of the present invention, there is provided a seat sliding apparatus, comprising: a lower rail to be mounted to a vehicle floor; an upper rail on which the lower rail slides; a memory mechanism section; a lock member locking the upper rail to the lower rail; and a walk-in mechanism section for locking and unlocking movement of a seat section in a forward-and-backward direction through the memory mechanism section and the lock member, wherein the memory mechanism section is assembled to at least one substrate so as to be united.

According to a second aspect of the present invention, as it depends from the first aspect, the memory mechanism section further comprises: an operation lever operating the lock member, the operation lever rotatably mounted with an axis fixing pin to the substrate on the side of the upper rail; a memory bracket holding the lock member in the unlocked state, the memory bracket rotatably mounted with an axis fixing pin to the substrate on a free end of the operation lever and on the side of the upper rail; and a memory holding pin holding the free end of the operation lever, the memory holding pin arranged on a polymerized portion of the free end of the operation lever and the memory bracket and on the side of the upper rail, the memory holding pin inserted through a slide hole provided to the substrate and through a slide hole provided to the memory bracket, wherein the memory mechanism section is united, and the united memory mechanism section is fixed to the upper rail by the axis fixing pin of the operation lever and the axis fixing pin of the memory bracket so that the memory mechanism section can be mounted to the upper rail.

According to a third aspect of the present invention, as it depends from the second aspect, the axis fixing pin of the operation lever has a collar section for determining a position of the operation lever on the side of the upper rail.

According to a fourth aspect of the present invention, as it depends from the second aspect, the axis fixing pin of the memory bracket has a collar section for determining a position of the memory bracket on the side of the upper rail.

According to a fifth aspect of the present invention, as it depends from the first aspect, the memory mechanism section can be arranged in a space formed between two substrates; and the memory mechanism further comprises: an operation lever operating the lock member, the operation lever rotatably mounted with an axis fixing pin to the substrate on the side of the upper rail: a memory bracket holding the lock member in the unlocked state, the memory bracket rotatably mounted with an axis fixing pin to the substrate on a free end of the operation lever and on the side of the upper rail; and a memory holding pin holding the free end of the operation lever, the memory holding pin arranged on a polymerized portion of the free end of the operation lever and the memory bracket, the memory holding pin inserted through slide holes provided to the substrates and a slide hole provided to the memory bracket, so that the memory mechanism section is united, thereby the substrates are fixed to the upper rail so that the united memory mechanism section can be mounted to the upper rail.

According to a sixth aspect of the present invention, as it depends from the second or the fifth aspect, the slide holes provided to the substrates are formed in a direction of a line connecting the axis fixing pin of the operation lever with the axis fixing pin of the memory bracket; and the slide hole provided to the memory bracket is slanted so that the memory holding pin can be moved to the unlocked side by rotary movement of the memory bracket in the clockwise direction.

According to the seat sliding apparatus in the first, second or fifth aspect, the operation lever for operating the lock member and the memory bracket for holding the lock member in the unlocked state are mounted with their axes being fixed to the substrate by the axis fixing pins, and the memory holding pin for holding the free end of the operation lever is pushed through the slide holes provided respectively to the substrate and memory bracket so that the memory mechanism section is united, and the united memory mechanism section is mounted to the upper rail, so the memory mechanism section can be assembled extremely easily, and the assembling can be improved greatly.

In addition, according to the seat sliding apparatus in the third or fourth aspect, since the collar sections for determining an axial direction are formed respectively to the axis fixing pin of the operation lever and the axis fixing pin of the memory bracket, the operation lever and memory bracket can be positioned easily.

In addition, according to the seat sliding apparatus in the sixth aspect, since the memory holding pin for locking and unlocking the operation lever is moved to the locked side and unlocked side by cooperation of the slide holes of the substrates and the slide hole of the memory bracket, the operation lever can be locked and unlocked by a simple arrangement.

### BRIEF DESCRIPTION OF THE ACCOMPANYING DRAWINGS

The above and further objects and novel features of the present invention will more fully appear from the following detailed description when the same is read in conjunction with the accompanying drawings, in which:
FIG. 1 is an explanatory front view showing a memory mechanism section of a seat sliding apparatus according to first embodiment of the present invention;
FIG. 2 is an explanatory plane view showing the memory mechanism section of the seat sliding apparatus;
FIG. 3 is an explanatory plane view showing the state that the memory mechanism section of the seat sliding apparatus is mounted to an upper rail;
FIG. 4 is an operation explanatory drawing showing the state that the seat sliding apparatus is locked in a forward position from a neutral position of a seat section;
FIG. 5 is an operation explanatory drawing showing the state that a seat back of the seat sliding apparatus is folded forward;
FIG. 6 is an operation explanatory drawing showing the state that the seat back of the seat sliding apparatus is folded forward further;
FIG. 7 is an operation explanatory drawing showing the seat sliding apparatus in a lock-off state;
FIG. 8 is an operation explanatory drawing showing the state that the seat back of the seat sliding apparatus is raised;
FIG. 9 is an operation explanatory drawing showing the state that the seat section of the seat sliding apparatus is again moved back to the vicinity of the neutral position;
FIG. 10 is an operation explanatory drawing showing the state that the seat sliding apparatus is locked in a backward position from the neutral position;
FIG. 11 is an operation explanatory drawing showing the state that the seat back of the seat sliding apparatus is folded forward;
FIG. 12 is an operation explanatory drawing showing the state that the seat back of the seat sliding apparatus is folded forward further;
FIG. 13 is an operation explanatory drawing showing the seat sliding apparatus in the lock-off state;
FIG. 14 is an operation explanatory drawing showing the state that the seat section of the seat sliding apparatus is moved to a most advanced position;
FIG. 15 is an operation explanatory drawing showing the state the seat section of the seat sliding apparatus is moved back to the vicinity of the neutral position; and
FIG. 16 is an explanatory plane view corresponding to FIG. 3 showing the seat sliding apparatus according to second embodiment of the present invention.

### DETAILED DESCRIPTION OF THE PREFERRED EMBODIMENTS

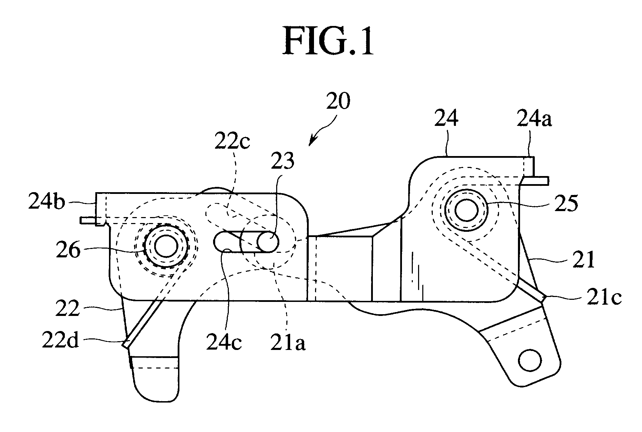

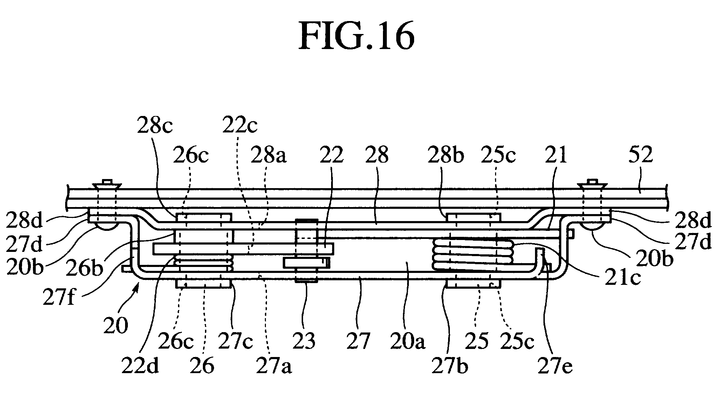

There will be detailed below the preferred embodiments of the present invention with reference to the accompanying drawings. Like members are designated by like reference characters. Here, Figs. 1 through 15 show a seat sliding apparatus of the first embodiment, and FIG. 16 shows the seat sliding apparatus of the second embodiment.

First, the description is given as to the first embodiment on reference to Figs. 1 through 15.

In the drawings, E represents the seat sliding apparatus for a vehicle seat, and by actuating a walk-in mechanism section 10, a movement of a seat section 40 in a forward-and-backward direction is locked and unlocked through a memory mechanism section 20 and a lock member 30, and a unity is formed by installing the memory mechanism section 20 to one substrate 24.

Further, the arrangement of the first embodiment is described in detail.

A pair of right and left lower rails 51 (only one is shown) which are extended along the forward-and-backward direction are mounted to a car body on a floor 50 side, and an upper rail 52 is supported to the lower rail 51 so as to be able to move along the forward-and-backward direction. The upper rail 52 is mounted to the seat section on the side of a seat cushion 41, and the upper rail 52 allows the seat section 40 to move in the forward-and-backward direction. Here, a force is applied to the seat section 40 by a spring, not shown, to the forward direction.

A plurality of engagement notches 51a are formed on the lower rail 51 along the forward-and-backward direction at equal distances. Moreover, a base section of a lock plate 30 as a lock member is mounted with its axis being fixed to a front portion of the upper rail 52 by mandrel 31, and a plurality, three, for example, engagement convex portions 30a, which can be engaged with the engagement notches 51a of the lower rail 51, are formed on a free end side of the lock plate 30.

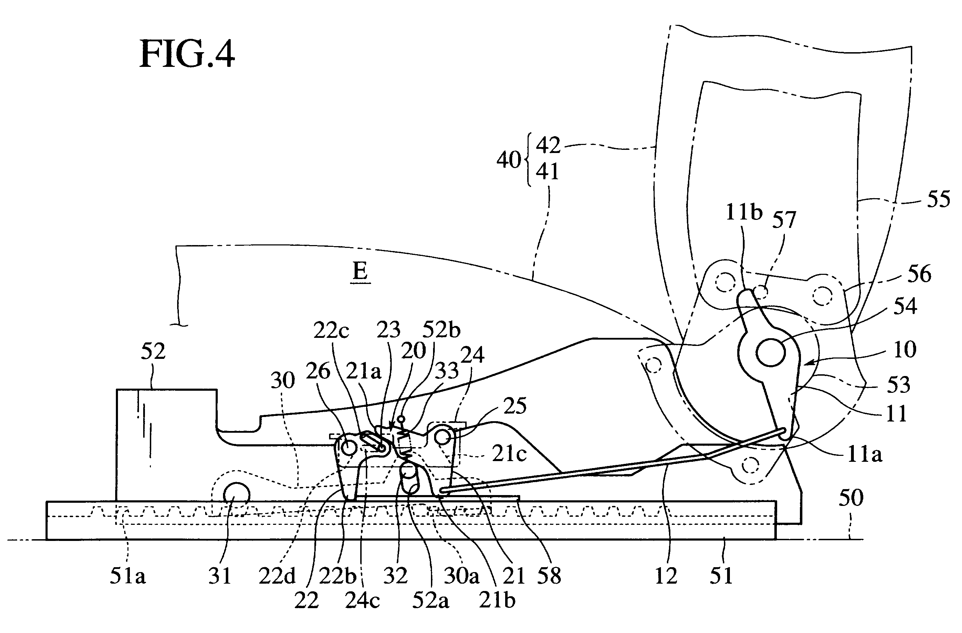

Furthermore, a lock pin 32 is provided into the middle portion of the lock plate 30. The lock pin 32 is fitted into a circular slot 52a formed on the upper rail 52 with the mandrel 31 of the lock plate 30 centered. A draft spring 33 is mounted across the lock pin 32 and an engagement hole 52b formed on the upper rail 52, and a force is applied to the lock plate 30 by the draft spring 33 so as to move circularly in a counterclockwise direction in FIG. 4, namely, in a direction where the engagement convex portions 30a are engaged with the engagement notches 51a of the lower rail 51. Here, instead of providing the lock pin 32, a portion of the lock plate 30 may be bent. Moreover, a torsion spring may be used instead of the draft spring 33.

A base plate 53 is fixed to the backward side of the upper rail 52, and an arm mounting plate 56 is supported to a mandrel 54 provided into the base plate 53 so as to be able to move circularly. The arm mounting plate 56 is disposed integrally with an arm 55 which can be folded in the forward-and-backward direction by a reclining unit. An operation pin 57 is provided into the arm mounting plate 56, and the arm 55 is mounted to the seat section 40 on the side of the seat back 42.

The memory mechanism section 20 has an operation lever 21 for operating the lock plate 30, a memory bracket 22 for holding the lock plate 30 in the unlocked state, and a memory holding pin 23 for holding one free end 21a of the operation lever 21, and the respective components are mounted to one substrate 24 so as to installed integrally to the upper rail 52.

The operation lever 21 is formed in a L-shaped or bell crank form, and it is mounted to the substrate 24 on the side of the upper rail 52 with its axis being fixed thereto by an axis fixing pin 25 with a prescribed space. A collar section 25a which positions the operation lever 21 is formed on the axis fixing pin 25.

In addition, a torsion coil spring 21c is wound around the axis fixing pin 25 between the operation lever 21 and the substrate 24, and one end of the torsion coil spring 21c is engaged with the edge of the operation lever 21 and the other end is engaged with an engaging section 24a formed by bending an edge of the substrate 24. A force is applied to the operation lever 21 by the torsion coil spring 21c so that the operation lever 21 moves circularly in the clockwise direction of FIG. 1. Here, the spring force of the torsion coil spring 21c is set so as to be smaller than the spring force of the draft spring 33.

The memory bracket 22 is formed in a L-shaped or bell crank form, and it is mounted to one free end of the operation lever 21 on the substrate 24 on the side of the upper rail 52 with its axis being fixed thereto by an axis fixing pin 26 with a prescribed space from the substrate 24. A collar section 26a for positioning the memory bracket 22 is formed to the axis fixing pin 26 on the side of the upper rail 52, and a positioning spacer 26b is provided between the collar section 26a and the memory bracket 22. Here, instead of providing the spacer 26b therebetween, a collar section may be formed integrally with the memory bracket 22 by the burring process.

In addition, a torsion coil spring 22d is wound around the axis fixing pin 26 between the memory bracket 22 and the substrate 24, and one end of the torsion coil spring 22d is engaged with the edge of the memory bracket 22 and the other end is engaged with a engagement section 24b formed by bending the edge of the substrate 24. A force is applied to the memory bracket 22 by the torsion coil spring 22d so that the memory bracket 22 moves circularly in the counterclockwise direction of FIG. 1. Here, the spring force of the torsion coil spring 22d is set so as to be smaller than the force of the draft spring 33.

Furthermore, a slide hole 22c is formed on one free end of the memory bracket 22, and this slide hole 22c slantingly intersects a slide hole 24c formed on the substrate 24 in a direction of a line connecting the axis fixing pins 25 and 26. A memory holding pin 23 for holding the free end 21a of the operation lever 21 is pushed through the slide holes 22c and 24c so as to be able to slide.

The slide hole 22c of the memory bracket 22 is formed slantingly so that the memory holding pin 23 can be moved by the circular movement of the memory bracket 22 in the clockwise direction to the unlocked side, namely, to the left side along the slide hole 24c of the substrate 24. Moreover, the memory holding pin 23 is disposed with a collar section whose diameter is larger than the slide holes 22c and 24c between the substrate 24 and the memory bracket 22.

When the memory holding pin 23 moves to the right side of the slide hole 24c, it goes into a moving locus of the free end 21a of the operation lever 21 so as to be brought into contact with the free end 21a. The free end 21a of the operation lever 21 advances to a direction where its upper surface intersects perpendicularly to a plane of the slide hole 24c so as to be brought into contact with the memory holding pin 23. An lower surface of the free end 21a is brought into contact with the memory holding pin 23 in a state that it is slanted with respect to the plane of the slide hole 24c. Namely, when the operation lever 21 starts to move circularly in the clockwise direction, the memory holding pin 23 obstructs the circular movement, and when the operation lever 21 moves circularly in the counterclockwise direction, the lower surface of the free end 21a moves the memory holding pin 23 to the left side, and the circular movement is continued.

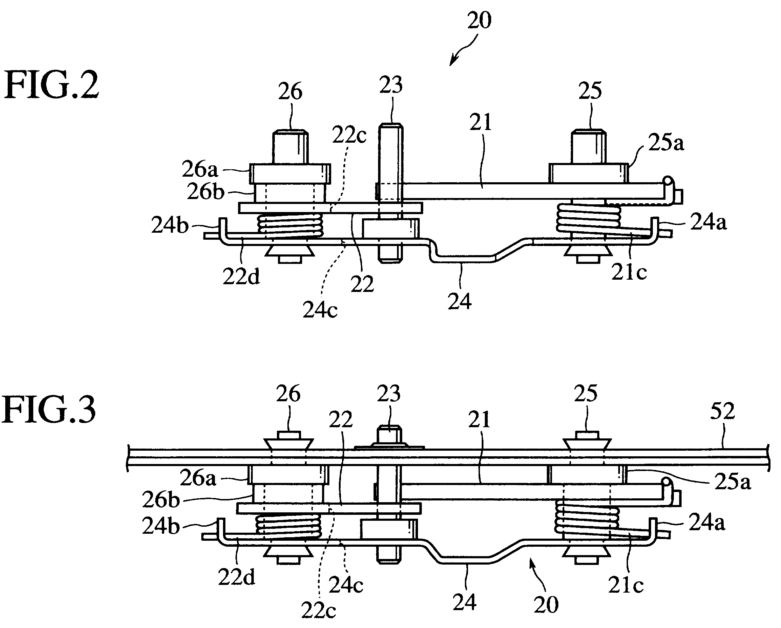

As mentioned above, the operation lever 21 and memory bracket 22 are mounted to the substrate 24 with their axes being fixed thereto by the axis fixing pins 25 and 26, and the torsion coil springs 21c and 22d are mounted respectively to the axis fixing pins 25 and 26, and the memory holding pin 23 is pushed through the slide holes 22c and 24c of the substrate 24 and memory bracket 22. As a result, the memory mechanism section 20 becomes a unity as shown in FIG. 1, and the united memory mechanism section 20 is, as shown in FIG. 3, can be mounted to the upper rail 52 by caulking and fixing the axis fixing pin 25 of the operation lever 21 and the axis fixing pin 26 of the memory bracket 22 to the upper rail 52.

In addition, a memory lock releasing member 58 is mounted to the upper surface of the lower rail 51, and when the seat section 40 which is moved forward by folding the seat back 42 is moved to a prescribed backward position, the other free end 22b of the memory bracket 22 is brought into contact with the memory lock releasing member 58. As a result, the memory bracket 22 moves circularly in the clockwise direction, and the memory holding pin 23 moves to the left side in the slide hole 24c of the substrate 24 so as to be evacuated from the moving locus of the free end 21a of the operation lever 21.

A walk-in lever 11 composing the walk-in mechanism 10 is mounted with its base section being fixed to the mandrel 54, and one end of a connecting rod 12 is connected and supported to the center of one free end 11a. The other end of the connecting rod 12 is connected and supported to the center of the other free end 21b of the operation lever 21.

Next, the description is given as to the functions according to the first embodiment of the present invention.

First, as shown in FIG. 4, the description is given as to the case where the seat sliding apparatus E is locked in a forward position from the neutral position of the seat section 40. In this case, the engagement convex sections 30a of the lock plate 30 are engaged with the engagement notches 51a of the lower rail 51 with pressure by the spring force of the draft spring 33, and thus the movement of the seat section 40 in the forward-and-backward direction is obstructed.

In addition, the free end 22b of the memory bracket 22 is in a position where it can be engaged with the memory lock releasing member 58 by the spring force of the torsion coil spring 22d, and the memory holding pin 23 is brought into contact with the right end of the slide hole 24c of the substrate 24 so as to be positioned within the moving locus of the free end 21a of the operation lever 21.

Further, the lock pin 32 is brought into contact with the operation lever 21 with pressure by the spring force of the draft spring 33, and the free end 21a of the operation lever 21 is positioned above the memory holding pin 23.

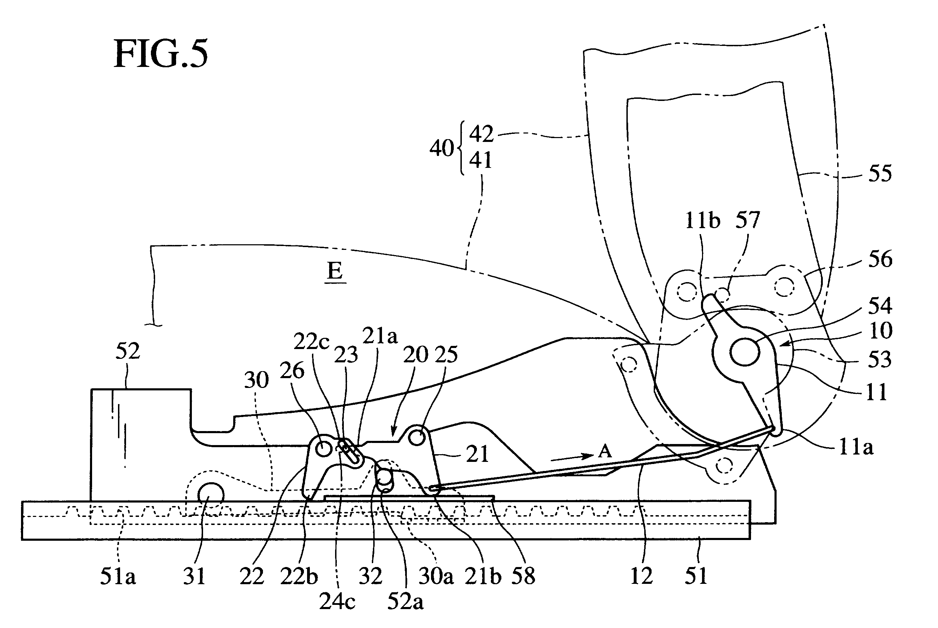

As shown in FIG. 5, when the seat back 42 is folded forward from the state shown in FIG. 4, the walk-in lever 11 moves circularly in the counterclockwise direction through the operation pin 57, the connecting rod 12 is drawn to the direction of an arrow A, and the operation lever 21 moves circularly in the counterclockwise direction so as to press down the lock pin 32. As a result, the lock plate 30 moves circularly in the clockwise direction, and engagement of the engagement convex portions 30a with the engagement notches 51a of the lower rail 51 is released. Namely, the seat sliding apparatus E is in the lock-off state.

In addition, the memory holding pin 23 is pressed down by the free end 21a of the operation lever 21 so as to move to the left direction in the slide hole 24c, and accordingly the memory bracket 22 moves in the clockwise direction.

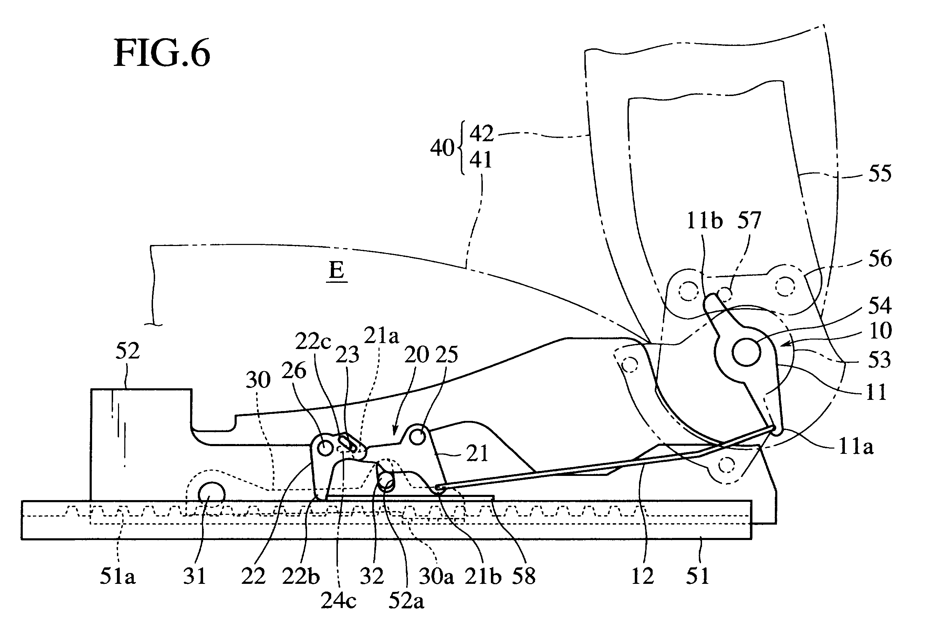

When the seat back 42 is further folded forward from the state shown in FIG. 5, as shown in FIG. 6, the operation lever 21 passes the position of the memory holding pin 23, the memory bracket 22 moves circularly in the counterclockwise direction by the spring force of the torsion coil spring 22d, the memory holding pin 23 moves to the rightmost position of the slide holes 22c and 24c, and the memory holding pin 23 moves to the position where it can be brought into contact with the free end 21a of the operation lever 21.

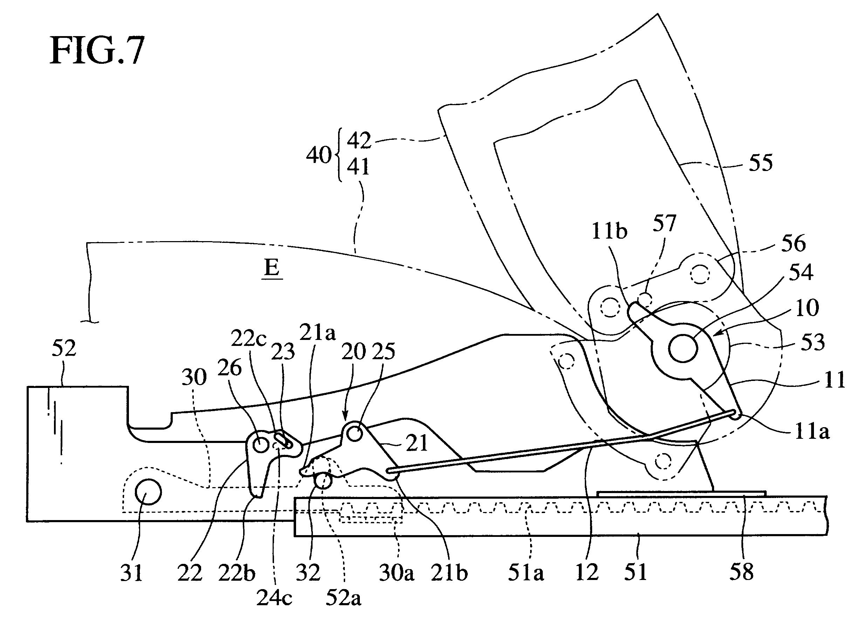

When the seat sliding apparatus E is in the lock-off state, as shown in FIG. 7, the seat section 40 moves to the most advanced position.

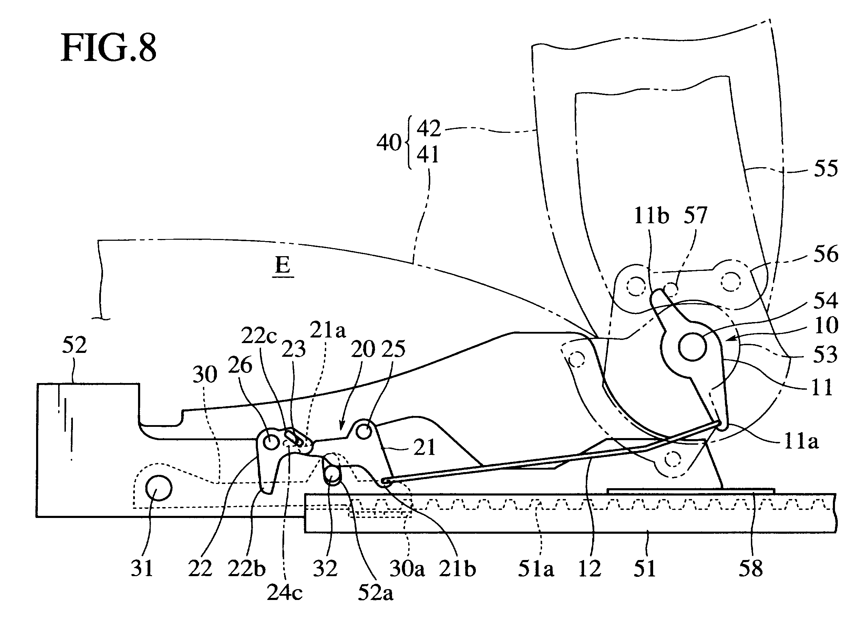

As shown in FIG. 8, when the seat back 42 is raised from the state shown in FIG. 7, the operation lever 21 moves circularly in the clockwise direction by the spring forces of the draft spring 33 and torsion coil spring 21c, and the free end 21a is engaged with the memory holding pin 23 with pressure. In this state, since the engagement convex portions 30a of the lock plate 30 are removed from the engagement notches 51a, the seat sliding apparatus E is held in the lock-off state.

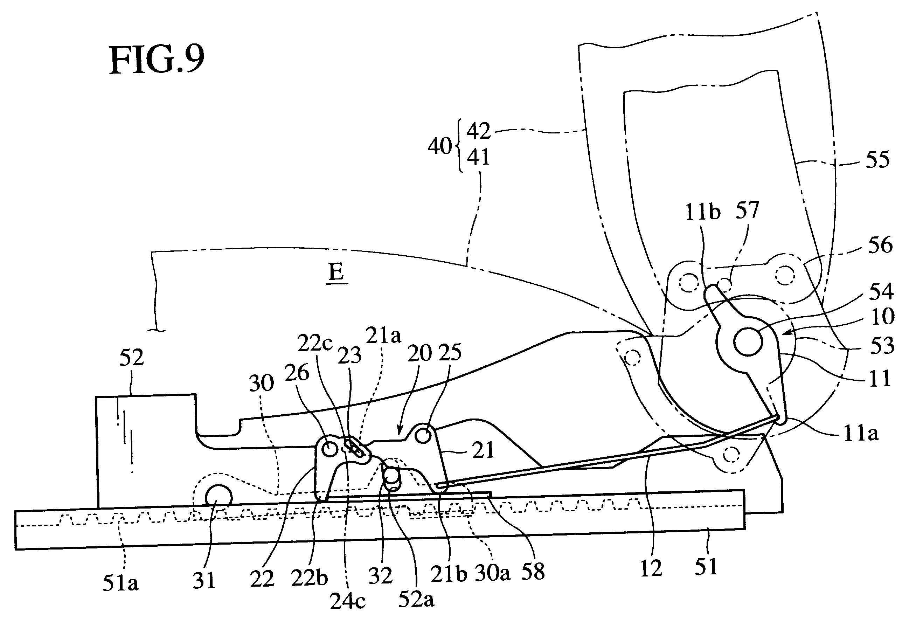

As shown in FIG. 9, when the seat section 40 is moved back again from the state shown in FIG. 8 to the vicinity of the neutral position, the free end 22b of the memory bracket 22 is brought into contact the left end surface of the lock releasing member 58 so as to move circularly in the clockwise direction, and accordingly the memory holding pin 23 moves to the left direction in the slide hole 24c. As a result, the engagement of the memory holding pin 23 with the free end 21a of the operation lever 21 is released, and the operation lever 21 moves circularly in the clockwise direction, and the lock plate 30 moves circularly in the counterclockwise direction. For this reason, the seat sliding apparatus E is returned to the locked state with the seat section 40 in the neutral position.

As mentioned above, even if the seat back 42 is raised after the seat back 42 is folded forward and the seat section 40 is moved forward, the seat sliding apparatus E can be maintained in the lock-released state, so the seat section 40 can be moved easily.

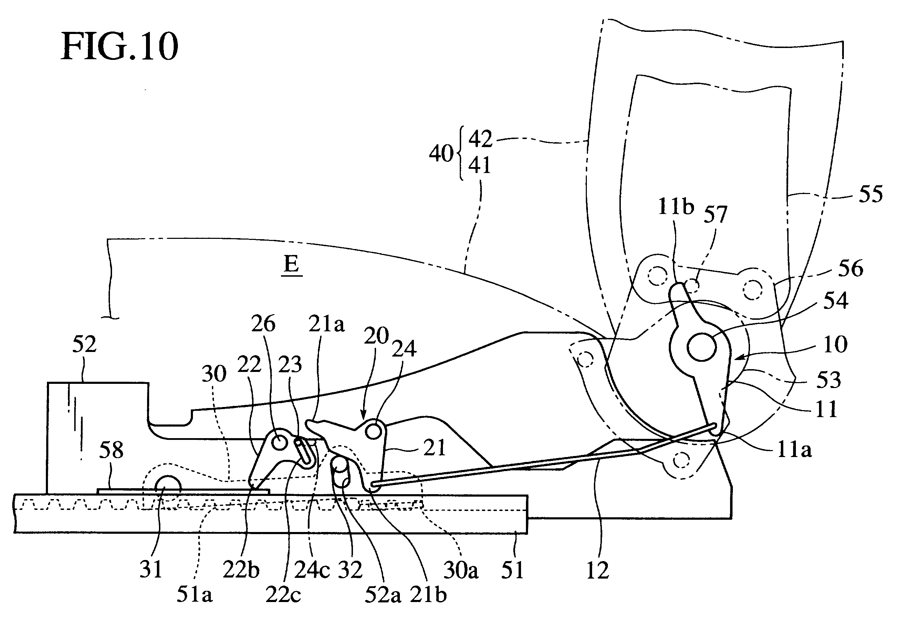

Next, the description is given as to the case where the seat sliding apparatus E is locked in a backward position from the neutral position of the seat section 40 as shown in FIG. 10. In this case, similarly to the case shown in FIG. 4, the engagement of the engagement convex portions 30a of the lock plate 30 with the engagement notches 51a obstructs the movement of the seat section 40 in the forward-and-backward direction.

In addition, the free end 22b of the memory bracket 22 is engaged with the upper surface of the memory lock releasing member 58 with pressure by the spring force of the torsion coil spring 22d, and the memory holding pin 23 is brought into contact with the left end of the slide hole 24c of the substrate 24. Further, the free end 21a of the operation lever 21 is above the memory holding pin 23, namely, in a position shifted from the memory holding pin 23.

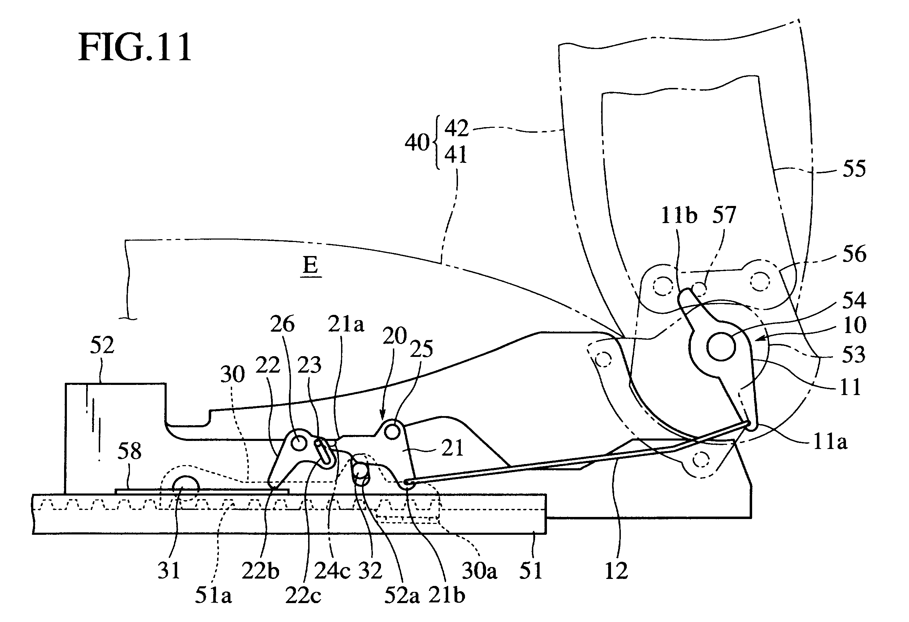

As shown in FIG. 11, when the seat back 42 is folded forward from the state shown in FIG. 10, similarly to the case shown in FIG. 5, the seat sliding apparatus E is in the lock-off state, but since the memory holding pin 23 moves to the left side at this time, the free end 21a of the operation lever 21 moves circularly without being brought into contact with the memory holding pin 23, and the memory holding pin 23 is held on the left side of the slide hole 24c of the substrate 24.

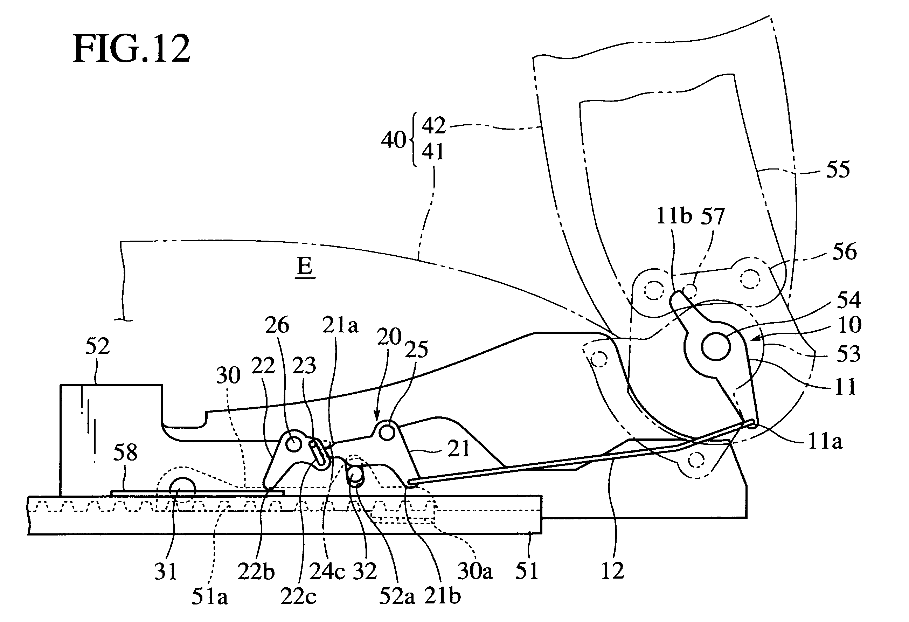

When the seat back 42 is folded forward further from the state shown in FIG. 11, as shown in FIG. 12, the free end 21a of the operation lever 21 moves below the memory holding pin 23. When the seat back 42 is raised in this state, the free end 21a of the operation lever 21 moves circularly in the clockwise direction without being brought into contact with the memory holding pin 23, and the seat sliding apparatus E is in the locked state shown in FIG. 10.

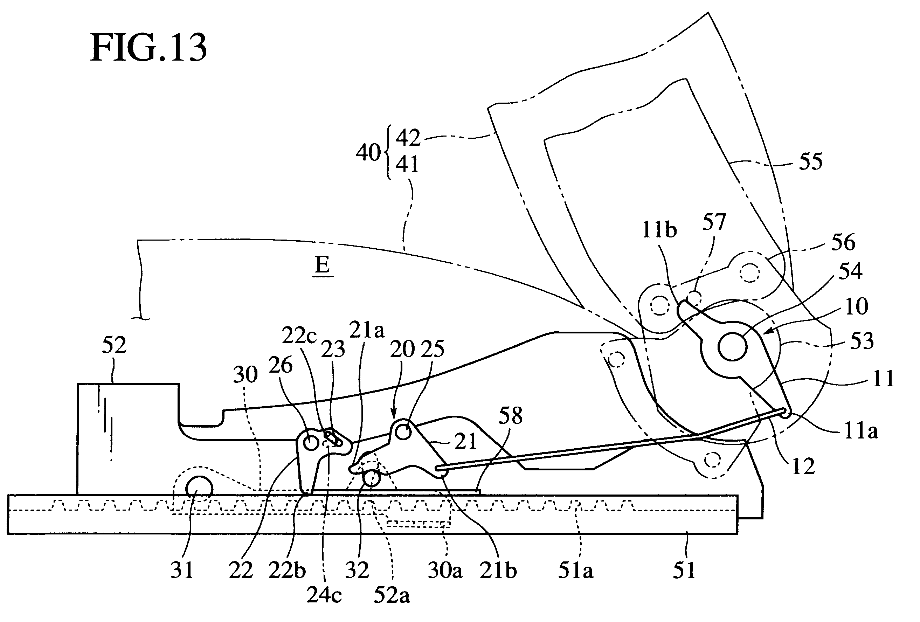

When the seat sliding apparatus E is in the lock-off state, the seat section 40 advances up to the position shown in FIG. 13, and the engagement of the free end 22b of the memory bracket 22 with the upper surface of the memory lock releasing member 58 is released and simultaneously the memory bracket 22 moves circularly in the counterclockwise direction. As a result, the memory holding pin 23 moves to a position where it is brought into contact with the right end of the slide hole 24c.

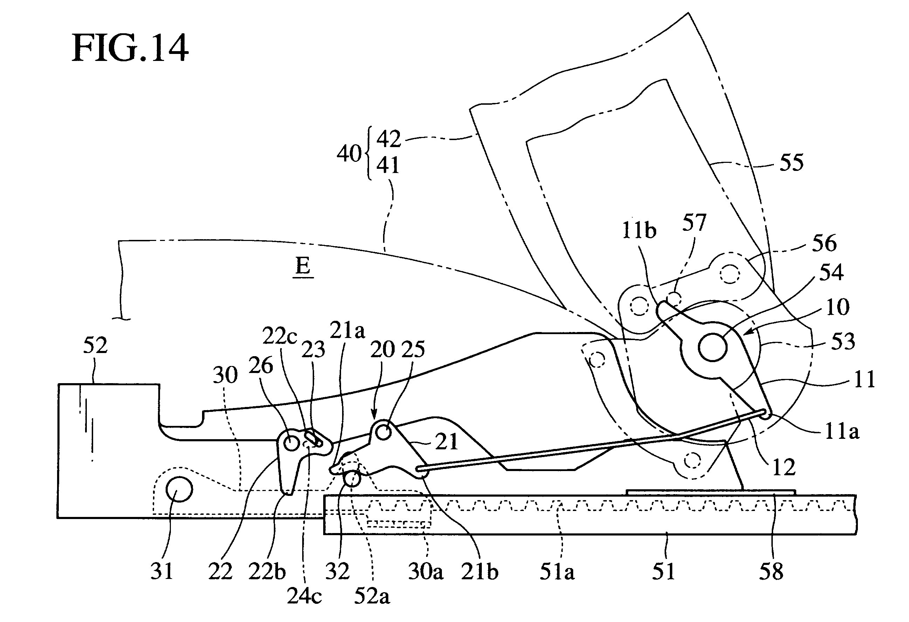

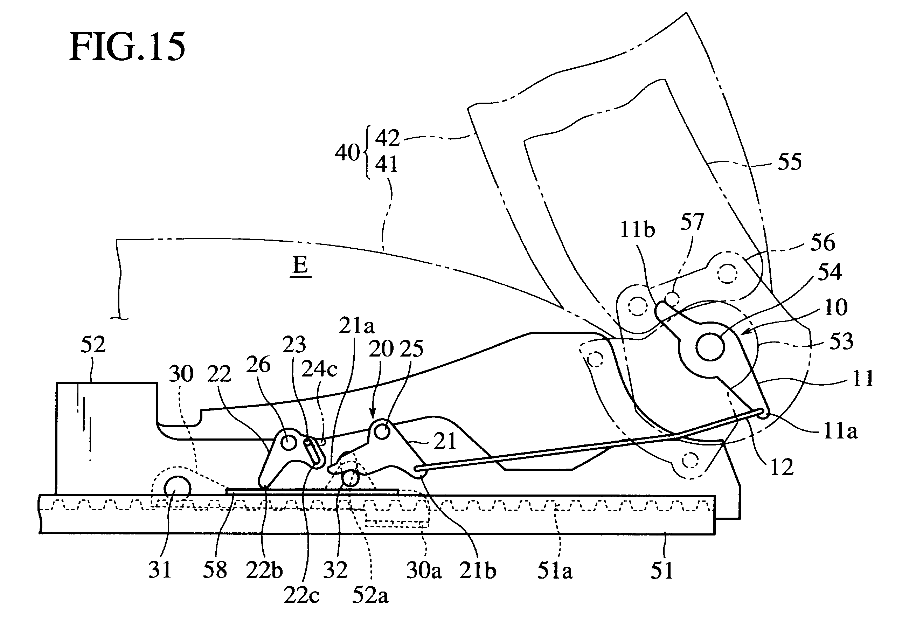

FIG. 14 shows the state that the seat section 40 moves to the most advanced position from the state shown in FIG. 13. As shown in FIG. 15, when the seat section 40 is moved back to the vicinity of the neutral position from its most advanced position without raising the seat back 42, the free end 22b of the memory bracket 22 is brought into contact with the left end surface of the memory lock releasing member 58 and then with the upper surface of the memory lock releasing member 58. Accordingly the memory bracket 22 moves circularly in the clockwise direction and moves to a position where the memory holding pin 23 is brought into contact with the left end of the slide hole 24c.

Thereafter, when the seat back 42 is raised in this position, the free end 21a of the operation lever 21 moves circularly in the clockwise direction without being engaged with the memory holding pin 23, and the lock pin 32 is raised. Then, the engagement convex portions 30a of the lock plate 30 are engaged with the engagement notches 51a of the lower rail 51 so that the seat sliding apparatus E is in the locked state.

According to the above-mentioned first embodiment of the present invention, the memory bracket 22, which holds the operation lever 21 for operating the lock plate 30 and the lock plate 30 in the unlocked state, is mounted to the substrate 24 with its axis being fixed thereto by the axis fixing pins 25 and 26, and the memory holding pin 23 for holding the free end 21a of the operation lever 21 is mounted to the substrate 24. As a result, the memory mechanism section 20 becomes a unity, and the united memory mechanism section 20 is mounted to the upper rail 52, so the memory mechanism section 20 can be assembled easily, and the assembling can be improved greatly.

In addition, since the collar sections 25a and 26a for determining a position of the axial direction are formed respectively to the axis fixing pin 25 of the operation lever 21 and the axis fixing pin 26 of the memory bracket 22, the operation lever 21 and memory bracket 22 can be positioned easily.

Furthermore, since the memory holding pin 23 for locking and unlocking the operation lever 21 is moved to the locked side and unlocked side of the operation lever 21 by cooperation of the slide holes 22c and 24c provided respectively to the substrate 24 and memory bracket 22, the operation lever 21 can be locked and unlocked by a simple arrangement.

FIG. 16 is an explanatory drawing corresponding to FIG. 3 according to the second embodiment of the present invention. Here, the elements which are the same as those in the first embodiment are represented by the same reference numerals, and the description thereof is omitted.

In the second embodiment, a space 20a is formed so that the components of the memory mechanism section 20 can be arranged between two substrates 27 and 28, and the operation lever 21 is fixed to the inner side of the substrates 27 and 28 by the axis fixing pin 25, and the memory bracket 22 is fixed to the substrate 27 and 28 by the axis fixing pin 26. Further, the memory holding pin 23 is arranged with it being pushed through slide holes 27a and 28a provided to the substrates 27 and 28 and the slide hole 22c provided to the memory bracket 22 so that the memory mechanism section 20 becomes a unity. The substrates 27 and 28 are fixed to the upper rail 52 so that the united memory mechanism section 20 can be mounted to the upper rail 20.

Further, the arrangement of the second embodiment is described in detail.

Bearings 27b and 28b, which support small diameter sections 25c formed on both the ends of the axis fixing pin 25, and bearings 27c and 28c, which supports small diameter sections 26c formed on both the ends of the axis fixing pin 26, are formed respectively on the substrates 27 and 28 by the burring process. Moreover, the spacer 26b is provided to the axis fixing pin 26 between the substrate 28 and memory bracket 22. Moreover, an engagement section 27e for engagement with the torsion coil spring 21c and an engagement section 27f for engagement with the torsion coil spring 22d are formed on the substrate 27.

Furthermore, mounting sections 27d and 28d are formed respectively on the substrates 27 and 28, and the mounting sections 27d and 28d are polymerized so as to be fixed to the upper rail 32 by a caulking pin 20b. As a result, the memory mechanism section 20 is mounted to the upper rail 52.

The other arrangements and functions are the same as those in the first embodiment.

While preferred embodiments of the present invention have been described using specific terms, such description is for illustrative purposes, and it is to be understood that changes and variations may be made without departing from the spirit or scope of the following claims.

## Claims

1. A seat sliding apparatus, comprising:
a lower rail to be mounted to a vehicle floor;
an upper rail on which the lower rail slides;
a memory mechanism section;
a lock member locking the upper rail to the lower rail; and
a walk-in mechanism section for locking and unlocking movement of a seat section in a forward-and-backward direction through the memory mechanism section and the lock member,
wherein the memory mechanism section is assembled to at least one substrate so as to be united.

2. The seat sliding apparatus according claim 1, wherein
the memory mechanism section, further comprises:
an operation lever operating the lock member, the operation lever rotatably mounted with an axis fixing pin to the substrate on the side of the upper rail:
a memory bracket holding the lock member in the unlocked state, the memory bracket rotatably mounted with an axis fixing pin to the substrate on a free end of the operation lever and on the side of the upper rail; and
a memory holding pin holding the free end of the operation lever, the memory holding pin arranged on a polymerized portion of the free end of the operation lever and the memory bracket and on the side of the upper rail, the memory holding pin inserted through a slide hole provided to the substrate and through a slide hole provided to the memory bracket, wherein
the memory mechanism section is united, and
the united memory mechanism section is fixed to the upper rail by the axis fixing pin of the operation lever and the axis fixing pin of the memory bracket so that the memory mechanism section can be mounted to the upper rail.

3. The seat sliding apparatus according claim 2, wherein
the axis fixing pin of the operation lever has a collar section for determining a position of the operation lever on the side of the upper rail.

4. The seat sliding apparatus according claim 2, wherein
the axis fixing pin of the memory bracket has a collar section for determining a position of the memory bracket on the side of the upper rail.

5. The seat sliding apparatus according claim 1, wherein
the memory mechanism section can be arranged in a space formed between two substrates; and
the memory mechanism further comprises:
an operation lever operating the lock member, the operation lever rotatably mounted with an axis fixing pin to the substrate on the side of the upper rail:
a memory bracket holding the lock member in the unlocked state, the memory bracket rotatably mounted with an axis fixing pin to the substrate on a free end of the operation lever and on the side of the upper rail; and
a memory holding pin holding the free end of the operation lever, the memory holding pin arranged on a polymerized portion of the free end of the operation lever and the memory bracket, the memory holding pin inserted through slide holes provided to the substrates and a slide hole provided to the memory bracket, so that the memory mechanism section is united, thereby the substrates are fixed to the upper rail so that the united memory mechanism section can be mounted to the upper rail.

6. The seat sliding apparatus according claim 5, wherein
the slide holes provided to the substrates are formed in a direction of a line connecting the axis fixing pin of the operation lever with the axis fixing pin of the memory bracket; and
the slide hole provided to the memory bracket is slanted so that the memory holding pin can be moved to the unlocked side by rotary movement of the memory bracket in a direction where wheel rotates when the vehicle backs up.

7. The seat sliding apparatus according claim 2, wherein
the slide holes provided to the substrates are formed in a direction of a line connecting the axis fixing pin of the operation lever with the axis fixing pin of the memory bracket; and
the slide hole provided to the memory bracket is slanted so that the memory holding pin can be moved to the unlocked side by rotary movement of the memory bracket in a direction where wheel rotates when the vehicle backs up.

8. A seat sliding apparatus for allowing a seat to be slid forwards and backwards and to be locked against such sliding, said apparatus comprising a mechanism for preventing locking against such sliding when the seat has been slid to a forward position, said mechanism comprising components which are mounted to one or more common mounting members to form a sub-assembly therewith which is mounted to a rail of the apparatus.
